# EUROPEAN PATENT APPLICATION

(11) **EP 4 748 716 A1**
(43) Date of publication of application: **27.05.2026**
(21) Application number: 25211337.8
(22) Date of filing: 27.10.2025
(51) Int. Cl.: B64D 47/02, B64D 47/06

(54) **AIRCRAFT WITH RETROREFLECTIVE SURFACES**

(30) Priority: 21.11.2024 IN 202411090607; 06.01.2025 US 202519010713
(71) Applicant: Honeywell International Inc., Charlotte, NC 28202 (US)
(72) Inventor: SURE, Anita, Charlotte, 28202 (US)
(74) Representative: Ingrassia, Fisher & Lorenz UK Ltd.

(57) **Abstract**

An aircraft includes a fuselage and a plurality of light assemblies mounted on the fuselage. Each light assembly includes a housing, a light source, and a lens cover. The light source is mounted within the housing. The lens cover is coupled to the housing and surrounds at least a portion of the light source. The lens cover includes a plurality of retroreflectors. The aircraft may also include a windscreen and a plurality of retroreflectors adjacent the windscreen. The aircraft may also include a plurality of windows at a least one retroreflector adjacent each window.

## Description

### CROSS REFERENCE TO RELATED APPLICATION

The present application claims benefit of prior filed India Provisional Patent Application No. 202411090607, filed November 21, 2024, which is hereby incorporated by reference herein in its entirety.

### TECHNICAL FIELD

At least one specification heading is required. Please delete this heading section if it is not applicable to your application. For more information regarding the headings of the specification, please see MPEP 608.01(a).

### BACKGROUND

When an aircraft is on the ground and parked, some or all of its exterior lights are typically extinguished. This can make it difficult for the operators in other aircraft or ground vehicles to see the aircraft. One solution to this problem is to keep the exterior lights of a parked aircraft energized. Another solution is to use ground-based, non-aircraft lights to illuminate parked aircraft. Both of these solutions rely on electrical power, and thus undesirably increase overall electrical power consumption.

Hence, there is a need for method of increasing the visibility of parked aircraft that does not rely on electrical power. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an aircraft includes a fuselage and a plurality of light assemblies mounted on the fuselage. Each light assembly includes a housing, a light source, and a lens cover. The light source is mounted within the housing. The lens cover is coupled to the housing and surrounds at least a portion of the light source. The lens cover includes a plurality of retroreflectors.

In another embodiment, an aircraft includes a fuselage, a windscreen, a plurality of first reflectors, and a plurality of light assemblies. The windscreen is coupled to the fuselage. The first retroflectors are coupled to the fuselage adjacent to at least a portion of the windscreen. The light assemblies are mounted on the fuselage and each includes a housing, a light source and a lens cover. The light source is mounted within the housing. The lens cover is coupled to the housing and surrounds at least a portion of the light source. The lens cover includes a plurality of second retroreflectors.

In yet another embodiment, an aircraft includes a fuselage, a plurality of windows, a plurality of first retroreflectors, and a plurality of light assemblies. The windows are coupled to the fuselage. At least one of the plurality of first reflectors is coupled to each of the plurality of windows. Each light assembly includes a housing, a light source, and a lens cover. The light source is mounted within the housing. The lens cover is coupled to the housing and surrounds at least a portion of the light source. The lens cover includes a plurality of second retroreflectors.

Furthermore, other desirable features and characteristics of the aircraft with retroreflectors will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a top-down view of an aircraft and a simplified representation of various components of an exterior aircraft lighting system;
FIG. 2 depicts a simplified representation of one embodiment of a light assembly that may be used in the exterior aircraft lighting system of FIG. 1;
FIG. 3 depicts a top-down view of one embodiment of a lens cover that may form part of the light assembly of FIG. 2 and that includes a plurality of retroreflectors;
FIG. 4 depicts a schematic representation of the function of a retroreflector; and
FIG. 5 depicts a top-down view of an aircraft illustrating where additional retroreflectors may be disposed.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

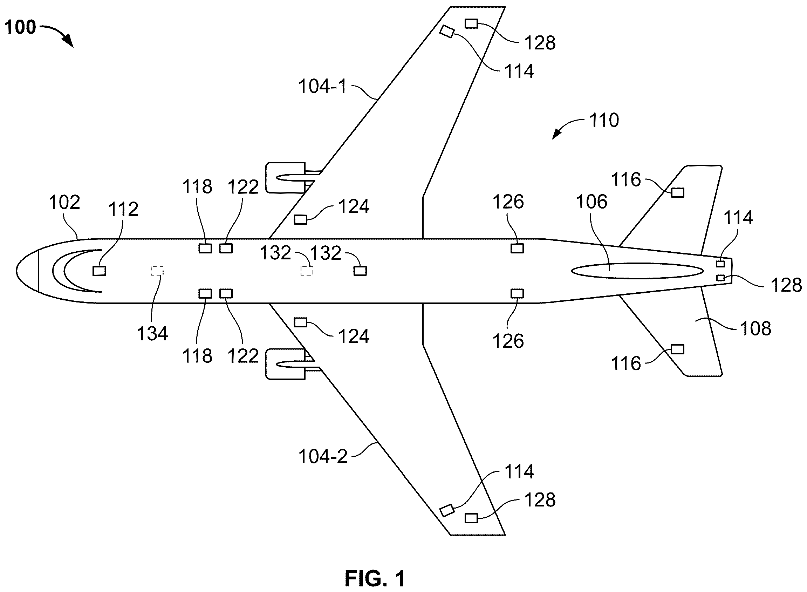

Referring to FIG. 1, a top-down view of an aircraft 100 and a simplified representation of various components of an exterior aircraft lighting system 110 are depicted. The aircraft 100 includes a fuselage 102, a first wing 104-1, a second wing 104-2, a first engine 105-1, a second engine 105-2, a vertical stabilizer 106, and a horizontal stabilizer 108. The exterior aircraft lighting system 110 includes a controller 112 and plurality of exterior lights, which include, at least in the depicted embodiment, navigation lights 114, logo lights 116, wing scan lights 118, engine scan lights 122, runway turnoff lights 124, cargo loading lights 126, anti-collision strobe lights 128, anti-collision beacon lights 132, and a landing light 134. For completeness, each of these exterior lights will now be briefly described. Before doing so, however, it is noted that the types and numbers of lights depicted and described herein are merely exemplary and that the aircraft 100 may have additional lights, such as taxi lights, that are not depicted or described herein.

The navigation lights 114 are disposed on the tips of the first and second wings 104-1, 104-2, an on the tail end of the fuselage 102, and the logo lights 116 are disposed on the horizontal stabilizer 108. As is generally known, the navigation lights 114 are energized during all phases of flight, and the navigation light 114 on the first wing 104-1 emits green light, the navigation 114 on the second wing 102-2 emits red light, and the navigation light 114 on the tail end of the fuselage 102 emits white light. As is also generally known, the logo lights 116, when energized, emit light onto the vertical stabilizer 106 to thereby illuminate a logo that may be provided thereon.

The wing scan lights 118 and the engine scan lights 122 are disposed on first and second sides 103-1, 103-2 of the fuselage 102, forward of the first and second wings 104-1, 104-2. The wing scan lights 118 and the engine scan lights 122 are normally deenergized during the flight but may be periodically energized by the flight crew to illuminate the wings 104-1, 104-2 and/or the engines 105-1, 105-2, to thereby facilitate visual inspection thereof.

The runway turnoff lights 124 are disposed, one each, on the roots of the first and second wings 104-1, 104-2. The runway turnoff lights 124 are directed forward and are typically deenergized during flight, and are energized during taxiing operations, at least at night. The cargo loading lights 126 are disposed, one each, on the left and right sides of the fuselage 102, and typically aft of the wings 104-1, 104-2. These lights are normally deenergized during flight.

The anti-collision strobe lights 128 are also disposed on the tips of the first and second wings 104-1, 104-2, and on the tail end of the fuselage 102. The anti-collision strobe lights 128 are typically energized to emit sequences of light flashes during normal operation of the aircraft 100. In some instances, however, the anti-collision strobe lights 128 are only operated during night and bad weather conditions.

The anti-collision beacon lights 132 are disposed on the top and the bottom of the fuselage 102 and may be arranged at the height of the wings in the longitudinal direction of the aircraft 100. The anti-collision beacon lights 132 are typically energized during flight, and the output of these lights 132 perceived as a sequence of light flashes in a given viewing direction.

The landing light 134, at least in the depicted embodiment, is coupled to the front running gear (not shown) of the aircraft 100. The running gear is normally stowed within the fuselage 102 during flight and is deployed during landing, taxiing, and take off operations. The landing light 134 may also be energized during landing, taxiing, and take off operations, and is otherwise deenergized.

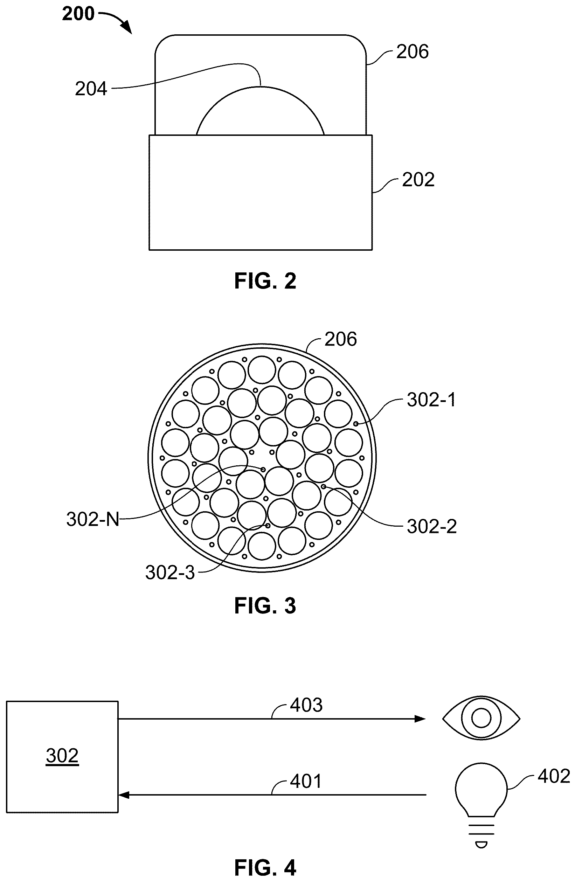

No matter the types and numbers of lights included in the exterior aircraft lighting system 110, each is typically constructed as a light assembly. Although the overall shape and specific configuration of each light assembly may vary, a generic embodiment of a light assembly that may be used to implement the function of one or more of the above-described lights is depicted in FIG. 2, and with reference thereto will now be described. Before doing so, however, it is noted that the shape and overall configuration of embodiment depicted in FIG. 2 is merely exemplary, and that some (or all) of the lights included in the exterior aircraft lighting system 110 may have different shapes and/or configurations.

With the above in mind, it is seen that the depicted light assembly 200 includes at least a housing 202, a light source 204, and a lens cover 206. The housing 202, as may be appreciated, is configured to be mounted at a location on or within the aircraft 100.

The light source 204 is mounted within the housing 202. It will be appreciated that the light source 204 may be implemented using one or more laser light sources, light emitting diodes (LEDs), light-emitting electrochemical cells, electroluminescent components, lamps, or any other suitable light emitting devices, just to name a few.

Regardless of how the light source 204 is specifically implemented, the lens cover 206 is coupled to the housing 202 and surrounds at least a portion of the light source 204. As may be appreciated, the lens cover 206 is sufficiently transparent to allow light emitted from the light source 204 to pass through it. In addition, the depicted lens cover 206, as shown more clearly in FIG. 3, includes a plurality of retroreflectors 302 (302-1, 302-2, 302-3, . . . 302-N), not all of which are labeled. It will be appreciated that the number and placement of the retroreflectors 302 may vary. Preferably, however, each of the retroreflectors 302 is disposed on the lens cover 206 at positions that are not intersected by the light emitted by the light source 204. It will additionally be appreciated that the retroreflectors 302 may be disposed on the lens cover 206 or integrally formed in the lens cover 206.

As is generally known, and as is depicted in FIG. 4, retroreflectors 302 reflect incident light 401 back toward the direction of the light source 402. Thus, when light from a light source 402, such as a light source on another aircraft, on a ground vehicle, or an aerodrome light source, is directed toward an aircraft 100 that includes lens covers 206 having retroreflectors 302, the light is reflected back 403 toward the direction of the light source. This reflected light increases the visibility of the aircraft 100, especially when it is parked.

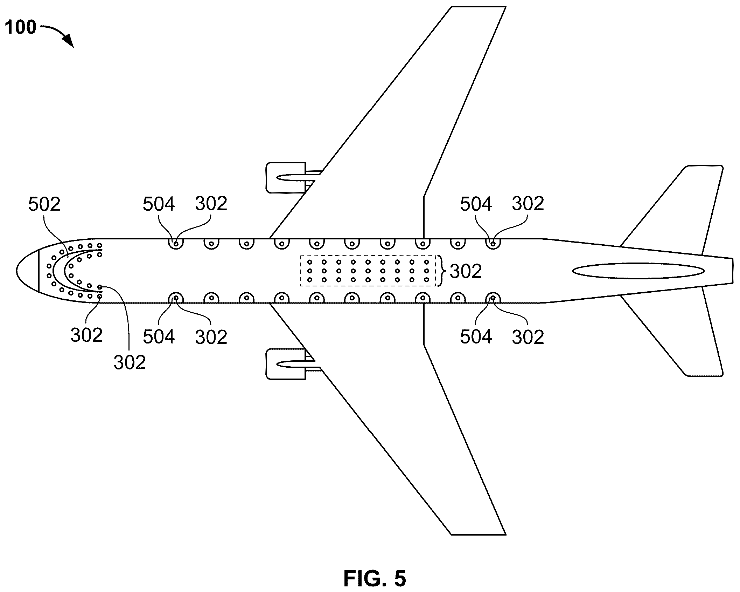

Turning now to FIG. 5, which, for clarity, depicts the top-down view of an aircraft 100 without the exterior aircraft light system 110, it is seen that the aircraft 100 additionally includes a windscreen 502 and a plurality of windows 504, such as passenger windows. The windscreen 502 is coupled to the fuselage 102 and, as is generally known, allows the flight crew in the aircraft cockpit to see ahead of the aircraft 100, and the windows 504 are coupled to the fuselage to allow passengers to look outside. In some embodiments, such as the one depicted in FIG. 5, the aircraft 100 may also have a plurality of retroflectors 302 coupled to the fuselage 102 adjacent to at least a portion of the windscreen 502 and at least one retroreflector 302, but possibly more, coupled to each of the plurality of windows 504. These additional retroreflectors further improve the visibility of the aircraft 100. As FIG. 5 further depicts, the aircraft 100 may also, in some embodiments, have a plurality of retroreflectors 302 coupled to one or more surfaces of the fuselage 102, to even further improve the visibility of the aircraft 100.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aircraft, comprising:
a fuselage;
a plurality of light assemblies mounted on the fuselage, each light assembly comprising:
a housing;
a light source mounted within the housing; and
a lens cover coupled to the housing and surrounding at least a portion of the light source, the lens cover including a plurality of retroreflectors.

2. The aircraft of claim 1, wherein the plurality of retroreflectors are disposed on the lens cover.

3. The aircraft of claim 1, wherein the plurality of retroreflectors are integrally formed in the lens cover.

4. The aircraft of claim 1, further comprising:
a windscreen coupled to the fuselage; and
a plurality of second retroflectors coupled to the fuselage adjacent to at least a portion of the windscreen.

5. The aircraft of claim 1, further comprising:
a plurality of windows coupled to the fuselage; and
at least one second retroreflector coupled to each of the plurality of windows.

6. The aircraft of claim 1, further comprising:
a plurality of second retroreflectors coupled to one or more surfaces of the fuselage.
